# EUROPEAN PATENT APPLICATION

(11) **EP 2 565 808 A1**
(43) Date of publication of application: **06.03.2013**
(21) Application number: 11179932.6
(22) Date of filing: 02.09.2011
(51) Int. Cl.: G06F 21/00

(54) **Immunized USB flash drive against computer and accounting viruses**

(71) Applicant: Hancu, Lucian-Viorel, 400614 Cluj-Napoca (RO)
(72) Inventor: Hancu, Lucian-Viorel, 400614 Cluj-Napoca (RO)

(57) **Abstract**

A USB stick consisting of personalized trademark printed on its external body part and preloaded software for immunization against computer malwares and economic errors on the fiscal declarations containing buy-sell transactions (national or international) due to be made periodically by the business entities. The process of cross-verification consists in finding a declaration according to the specified type and the issue period (1), testing whether it has been previously loaded to the server or no (2), uploading (3) and cross-verifying it with all the similar declarations found on the system (4) and finally displaying the results (5). In the case the declaration is already loaded by a previous user upload, the steps 3 and 4 are omitted.

## Description

The invention refers to a personalized USB flash drive which contains pre-installed software and user manuals for the immunization against both computer and accounting viruses, having the external part of the drive personalized with a trademark image. The computer viruses (or malware) are reflected into the autorun.inf file that can reside on the USB flash drive. The accounting viruses (or malware) are represented by the errors on the financial reports that must be submitted to the Fiscal Authorities by the European VAT payers, which are named as Declaration 340 and 347 in Spain and Declaration 394 in Romania ― at national level, and Declaration 390 (Spain, Romania) and **Intrastat** Declaration - at the European level.

The errors on the fiscal declarations consist in errors of incorrect introduction of business entities or incorrect input of declared sums (depicted from the cross-verification of these financial reports).

The computer immunization consists in replacing the possibly infected autorun.inf (7) file by a clean (8, 9) one and not permitting other potential malware software to access this file (10).

The immunization against accounting viruses consists in automatically verifying all the fiscal declarations that reside on the USB stick or any internal or external drive (2) by loading them to a centralized server (3, 4) and displaying individual errors (5) (errors of generating the declaration) or cross-verification errors (differences between the declarations between the suppliers and clients).

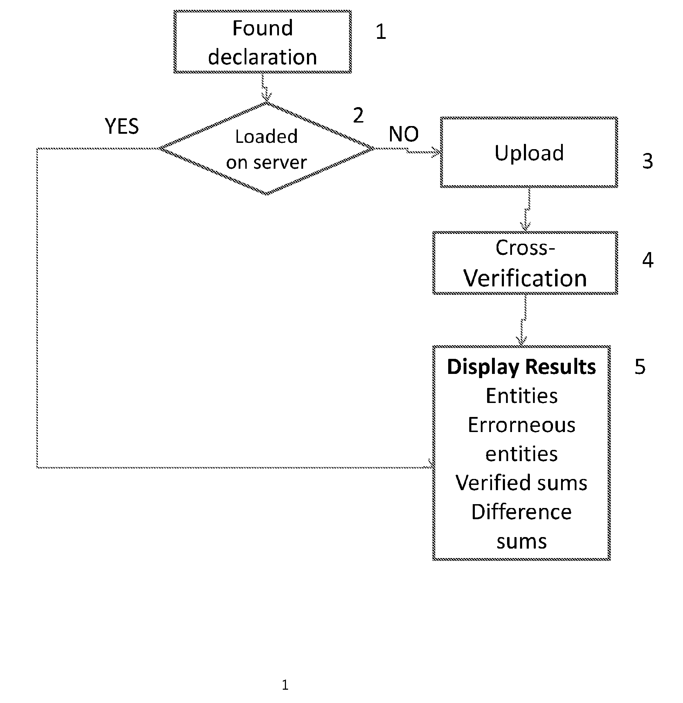

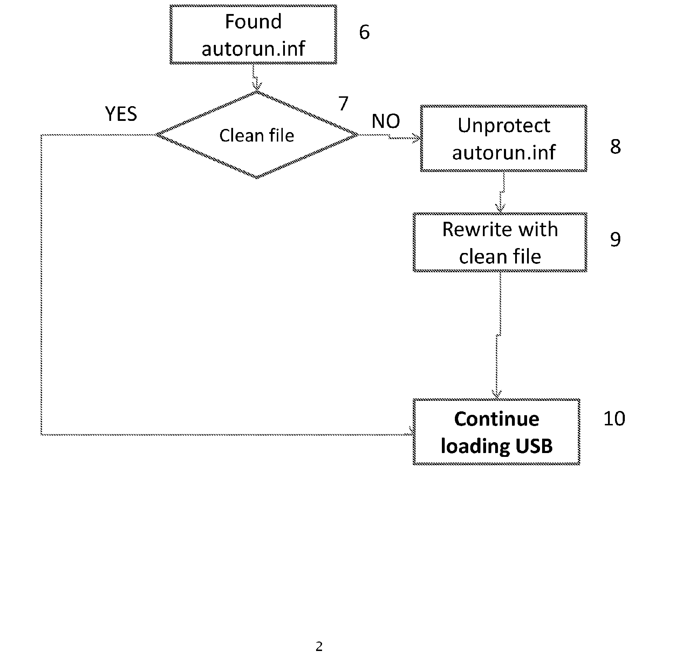

## Claims

1. A personalized USB drive containing an image of trademark on the external body of the USB flash drive and personalized software for:
a. Immunization against computer malware (computer viruses)
b. Immunization against accounting malware (errors in the computed declarations)

2. The system of cross-verifications of financial reports consisting of a centralized server and methods of
a. automatically updating information to the server
b. retrieving cross-verification information on the declarations
c. controlling access and denying unauthorized access to private information on the competitors
d. exchanging e-mail-based messages for correcting the previously-discovered errors.

3. A method of producing the USB stick consisting of:
a. Producing a generalized USB stick
b. Personalizing the stick with the image trademark
c. Preloading the immunization software and user manual.

4. Usage of the device(s) as described in the claims 1-2.
